# FASCICULE DE BREVET EUROPEEN

(11) **EP 2 523 176 B1**
(45) Date de publication et mention de la délivrance du brevet: **21.05.2014**
(21) Numéro de dépôt: 12166933.7
(22) Date de dépôt: 07.05.2012
(51) Int. Cl.: G08G 5/02, G05D 1/06, B64D 43/00, G05D 1/10

(54) **Procédé et dispositif d'aide au pilotage d'un aéronef lors d'une phase d'approche intermédiaire d'une descente**
Vefahren und Vorrichtung zur Unterstützung der Steuerung eines Luftschiffs in der mittleren Anflugphase der Landephase
Method and device for aiding the piloting of an aircraft during an intermediate approach phase of a descent.

(30) Priorité: 12.05.2011 FR 1154125
(43) Date de publication de la demande: 14.11.2012
(73) Titulaire: Airbus Opérations SAS, 31060 Toulouse (FR)
(72) Inventeur: Dulac, Clément, 31300 Toulouse (FR)
(74) Mandataire: Gevers France

(56) Documents cités:
- US-A- 4 825 374
- US-A1- 2006 273 928

## Description

La présente invention concerne un procédé et un dispositif d'aide au pilotage d'un aéronef, en particulier d'un avion de transport, lors d'une phase d'approche intermédiaire au cours d'une descente de l'aéronef, notamment en vue d'un atterrissage sur un aéroport.

On sait que, lors d'un atterrissage, un avion perd de l'altitude et diminue sa vitesse pour passer de conditions de vol en croisière à des conditions d'atterrissage. A cours de sa descente, l'avion prend diverses configurations aérodynamiques. Lors du vol en croisière, la surface extérieure de l'avion est la plus lisse possible. Lorsqu'il s'approche du sol, différentes étapes sont prévues, au cours desquelles les becs et les volets de l'avion sont sortis. De façon usuelle, un avion comprend au moins trois configurations distinctes de sortie des becs et volets.

De plus, lors de l'approche, l'avion suit généralement un profil vertical comprenant des paliers d'altitude, au cours desquels sont réalisées des décélérations.

Un tel procédé est connu du document US 2006/273928.

Pour diminuer les nuisances sonores au sol lors d'un atterrissage, il est connu de réaliser une approche de type CDO (pour « Continuous Descent Operations » en anglais, à savoir opérations en descente continue). Une telle approche ne comprend pas de palier de décélération à altitude constante, mais l'avion décélère en même temps qu'il descend, et la descente est calculée de manière à intercepter un segment d'alignement de descente de l'aéroport, sans palier.

Une approche de type CDO consiste donc à éliminer les paliers usuels pour permettre à l'avion de voler plus haut et avec des niveaux de poussée plus faibles.

Actuellement, ce type d'approche est uniquement validé et implémenté pour de faibles densités de trafic.

L'objet de la présente invention est de permettre la mise en oeuvre de ce concept lors de périodes de trafic plus dense, sans pour autant dégrader la capacité et la sécurité.

La méthode habituellement utilisée par le contrôle aérien pour gérer l'espacement entre avions est le vectoring, ce qui correspond à utiliser des instructions de cap et/ou de vitesse. Aussi, dans le cadre de l'augmentation du trafic aérien, une nouvelle fonction d'aide à l'espacement des avions est développée pour se rapprocher de la capacité théorique en TMA (« Terminal Maneuver Area » en anglais), dite fonction ASPA S&M (« Airborne Separation Assistance System Spacing Sequencing and Merging » en anglais).

L'objectif de la fonction ASPA S&M est d'améliorer la capacité et la régularité du trafic aérien en réduisant la charge de travail du contrôleur sans augmenter celle de l'équipage. Pour atteindre cet objectif, un avion doit obtenir une instruction d'espacement en temps derrière un autre avion, appelé avion leader, et maintenir cet espacement en temps de manière automatique avec une tolérance fixe. Des données permettant de déterminer une vitesse cible nécessaire au guidage sont transmises au système d'assistance à la séparation. Cette vitesse cible est ensuite utilisée pour réaliser le guidage. Le contrôle de la vitesse est réalisé en utilisant des données qui proviennent de l'avion leader. Ces données utilisées pour le calcul de l'ajustement de la vitesse doivent être mémorisées, car le but est de se trouver à chaque position passée de l'avion leader avec un décalage dans le temps égal à l'espacement demandé.

La mise en oeuvre d'une telle fonction ASPA S&M présente une phase d'acquisition, au cours de laquelle l'espacement requis par rapport à l'avion leader est acquis, espacement qui doit ensuite être maintenu après son acquisition. Afin de maintenir cet espacement, la position, la vitesse et l'accélération de l'avion suiveur et de l'avion leader sont reliées par une loi dynamique. Cette manoeuvre consiste donc à acquérir puis à maintenir un espacement en temps (au plus tard à la fin d'une durée donnée ou au plus tard à un point donné, selon la manoeuvre instruite par le contrôleur), et à le maintenir à une tolérance donnée près en agissant sur la vitesse tout en suivant le plan de vol.

L'inconvénient d'une telle fonction ASPA S&M est qu'elle implique pour l'avion suiveur (si ses performances sont différentes de celles de l'avion leader) des remises de poussée et des sorties du profil de hauteur et de vitesse, qui a été optimisé par le système de gestion de vol de type FMS (« Flight Management System » en anglais) en fonction des performances de l'avion, de contraintes publiées et de la météo. Ainsi, le profil initial optimisé de l'avion suiveur (tel que calculé par le système FMS) est dégradé en raison des contraintes générées par le suivi de l'avion leader.

De plus, certaines limitations sont prévues pour la mise en oeuvre d'une fonction ASPA S&M qui nécessite notamment ;
- des aéronefs avec des performances similaires ;
- des plans de vol latéraux identiques ; et
- un pilote automatique et une automanette engagés.

La mise en oeuvre d'une telle fonction peut donc mener à des impacts environnementaux négatifs pour un vol isolé.

L'invention a pour objet de définir un profil vertical adapté, pour limiter les impacts de la fonction ASPA S&M et permettre ainsi une utilisation d'une approche de type CDO lors d'un trafic dense.

La présente invention concerne plus particulièrement un procédé d'aide au pilotage d'un aéronef, notamment d'un avion de transport, lors d'une phase d'approche intermédiaire d'une descente de l'aéronef, qui permet de remédier aux inconvénients précités.

A cet effet, selon l'invention, ledit procédé est remarquable en ce que :
a) on reçoit les valeurs de paramètres relatifs à l'aéronef et à son vol ;
b) à l'aide de ces valeurs et de performances prédéterminées de l'aéronef, on détermine, pour au moins ladite phase d'approche intermédiaire, un profil vertical qui comprend au moins un segment de décélération à pente adaptée, et qui est tel qu'il permet à l'aéronef de maintenir un taux de décélération constant pendant ladite phase d'approche intermédiaire ; et
c) on utilise ce profil vertical pour aider au pilotage de l'aéronef lors de ladite phase d'approche intermédiaire.

Ainsi, grâce à l'invention, on définit un profil vertical permettant à l'aéronef de maintenir un taux de décélération constant pendant toute la phase d'approche intermédiaire. Ce taux de décélération (nominal) peut par exemple être défini à partir d'une vitesse corrigée de type CAS (« Calibrated Air Speed » en anglais), d'une vitesse vraie de type TAS (« True Air Speed » en anglais) ou d'une vitesse sol, et sa valeur peut, par exemple, être proche de -4kts/10sec pour permettre une décélération confortable. Ledit profil vertical peut ensuite être utilisé de différentes manières (précisées ci-dessous) pour aider au pilotage de l'aéronef lors de ladite phase d'approche intermédiaire.

Si on met en oeuvre l'invention sur plusieurs aéronefs qui se suivent, et que l'on prévoit un taux de décélération commun pour tous ces aéronefs, on est en mesure de maintenir un espacement en temps constant entre ces derniers. L'invention permet ainsi d'améliorer la compatibilité d'une approche de type CDO avec une fonction ASPA S&M, en assurant un taux de décélération commun pour tous les aéronefs en phase d'approche intermédiaire. Les ordres tactiques (du contrôle aérien (ATC) ou de la fonction ASPA S&M) pour maintenir l'espacement entre les aéronefs présentent ainsi un impact réduit sur la trajectoire volée, par rapport à une mise en oeuvre usuelle. Par conséquent, au niveau d'une flotte d'aéronefs, on peut s'attendre à un impact réduit de la fonction ASPA S&M sur l'environnement.

Pour que le concept conforme à l'invention, dit concept A-FPA, (pour « Adaptive Flight Path Angle » en anglais) puisse fonctionner, on a besoin :
- d'un nouveau type de procédure publiée à l'approche (incluant des contraintes en taux de décélération) ; et
- que tous les aéronefs impliqués soient capables de voler ce type de procédure (c'est-à-dire la capacité de l'aéronef à maintenir un taux de décélération constant en descente), quelle que soit la manière d'y arriver.

Dans le cadre de la présente invention, ledit profil vertical peut comprendre :
- soit un unique segment de décélération non linéaire, pour lequel la pente est adaptée de façon continue ;
- soit une succession de segments de décélération linéaires (rectilignes), une pente particulière que doit respecter l'aéronef étant associée à chacun desdits segments de décélération.

Par ailleurs, de façon avantageuse, lesdits paramètres, dont les valeurs sont reçues à l'étape a), comprennent au moins certaines des données suivantes :
- la configuration aérodynamique de l'aéronef ;
- la vitesse de l'aéronef ;
- la masse de l'aéronef ; et
- des conditions environnementales dans lesquelles est réalisé le vol de l'aéronef.

Ainsi, pour chaque segment de la phase d'approche intermédiaire, parmi les trois variables vitesse, poussée et pente, la vitesse et la poussée sont fixées, et la pente (FPA) est adaptée à la décélération visée et aux différentes conditions de vol (vitesse, configuration aérodynamique, météo et masse avion).

En outre, avantageusement :
- on met en oeuvre l'étape b) à l'aide de moyens faisant partie d'un système de gestion de vol, de type FMS (« Flight Management System » en anglais), de l'aéronef ; et
- ladite phase d'approche intermédiaire débute lorsque l'aéronef atteint, lors d'une descente, une position dans laquelle il présente des capacités de décélération prédéterminées, et se termine lorsqu'une trajectoire d'atterrissage d'une phase d'approche finale est atteinte.

Dans un premier mode de réalisation, on met en oeuvre lesdites étapes a) et b), avant de faire voler l'aéronef selon ladite phase d'approche intermédiaire, de manière à réaliser une prédiction d'un profil vertical.

En outre, dans un second mode de réalisation, on met en oeuvre au moins ladite étape b) (en temps réel) directement au cours d'un vol de l'aéronef selon ladite phase d'approche intermédiaire, et à l'étape c), on guide l'aéronef de sorte qu'il respecte le profil vertical déterminé en temps réel à l'étape b).

Dans ce second mode de réalisation, si, pendant une phase d'approche intermédiaire, au cours de laquelle l'aéronef est guidé de manière à respecter le profil vertical déterminé en temps réel à l'étape b), une autre fonction de guidage est engagée, par exemple une fonction ASPA S&M, de façon avantageuse, le guidage selon ledit profil vertical est suspendu et l'aéronef est uniquement guidé selon cette autre fonction de guidage. Dans ce cas, des contraintes imposées (altitude ou vitesse) sont donc prioritaires par rapport à une décélération visée.

Par conséquent, lorsque au cours d'une phase d'approche intermédiaire, au cours de laquelle l'aéronef est guidé de manière à respecter le profil vertical, la fonction ASPA S&M est engagée, elle surpasse la contrainte publiée de décélération. Dans ce cas, la fonction ASPA S&M n'a, en général, qu'un minimum d'impact et ne sert qu'à ajuster la vitesse de l'aéronef suiveur par rapport à celle de l'aéronef leader, pour de petits écarts dûs à de légères erreurs de prédiction.

La présente invention concerne également un dispositif d'aide au pilotage d'un aéronef, en particulier d'un avion de transport, lors d'une phase d'approche intermédiaire d'une descente de l'aéronef, notamment en vue d'un atterrissage sur un aéroport.

A cet effet, selon l'invention, ledit dispositif est remarquable en ce qu'il comporte :
- des premiers moyens pour recevoir les valeurs de paramètres relatifs à l'aéronef et à son vol ;
- des deuxièmes moyens qui font partie, de préférence, d'un système de gestion de vol et qui déterminent, pour au moins ladite phase d'approche intermédiaire, à l'aide de ces valeurs et de performances prédéterminées de l'aéronef, un profil vertical qui comprend une succession de segments de décélération à pente adaptée, une pente particulière que doit respecter l'aéronef étant associée à chacun desdits segments de décélération, et qui est tel qu'il permet à l'aéronef de maintenir un taux de décélération constant pendant ladite phase d'approche intermédiaire ; et
- des troisièmes moyens qui utilisent ce profil vertical pour aider au pilotage de l'aéronef lors de ladite phase d'approche intermédiaire.

La présente invention concerne également un aéronef, en particulier un avion de transport, qui est muni d'un dispositif tel que celui précité.

Les figures du dessin annexé feront bien comprendre comment l'invention peut être réalisée. Sur ces figures, des références identiques désignent des éléments semblables.
La figure 1 est le schéma synoptique d'un dispositif d'aide au pilotage conforme à l'invention.
La figure 2 montre schématiquement un profil vertical emprunté par un aéronef lors d'une descente de l'aéronef en vue d'un atterrissage

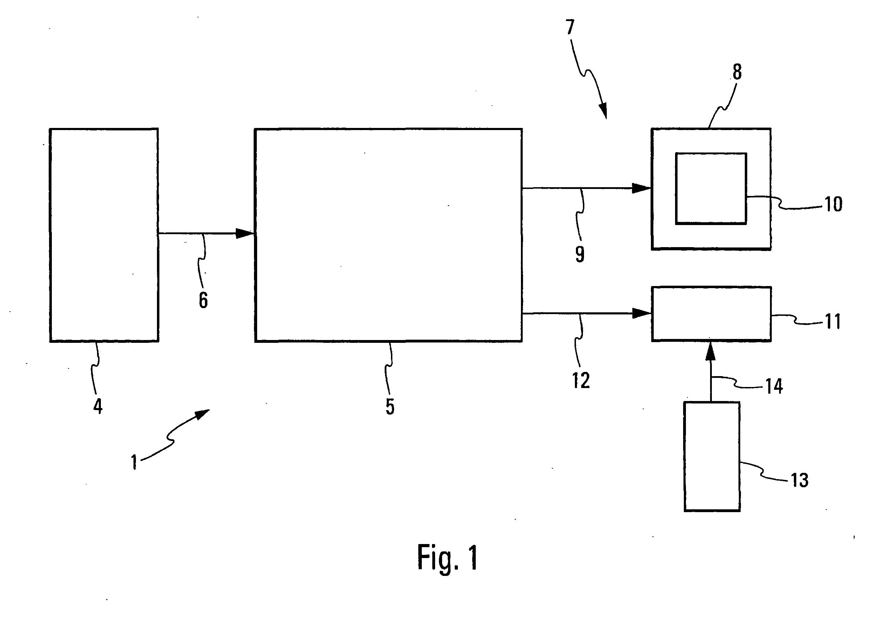

Le dispositif 1 conforme à l'invention et représenté schématiquement sur la figure 1 est destiné à aider au pilotage d'un aéronef A, en particulier d'un avion de transport gros porteur, lors d'une descente de cet aéronef, notamment en vue d'un atterrissage sur une piste 2 d'un aéroport.

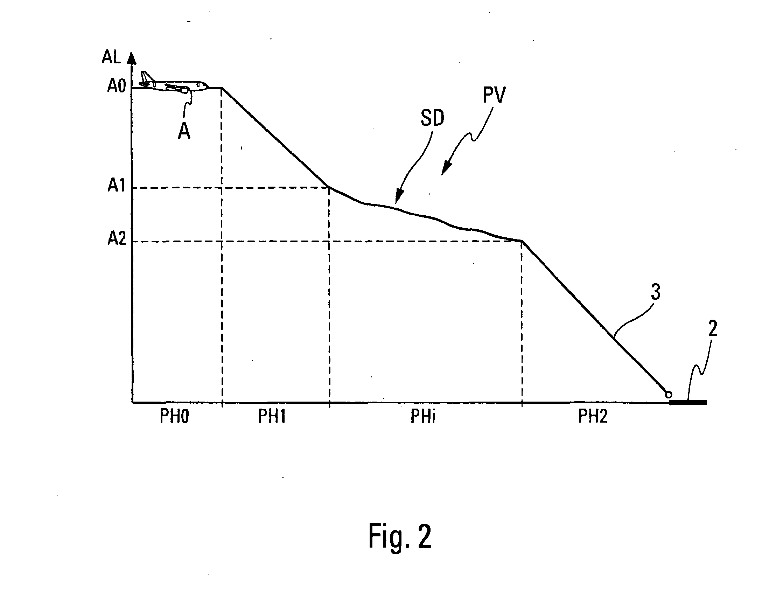

Plus précisément, ledit dispositif 1 est destiné à aider au pilotage de l'aéronef A lors d'une phase d'approche intermédiaire PHi qui, comme représenté sur la figure 2 :
- débute lorsque l'aéronef A atteint, lors de la descente, des capacités de décélération prédéterminées, à une altitude A1 ; et
- se termine lorsqu'une trajectoire d'atterrissage 3 d'une phase d'approche finale PH2 est capturée, à une altitude A2.

Sur la figure 2, on a représenté de plus :
- la fin d'un palier de vol PHO usuel d'altitude AO, par exemple 10000 pieds ;
- une première phase d'approche PH1, après le palier PHO, et avant la phase d'approche intermédiaire PHi, qui est généralement volée à vitesse constante ; et
- ladite phase d'approche finale PH2 (après la phase d'approche intermédiaire PHi), au cours de laquelle l'aéronef A est guidé le long de la trajectoire d'atterrissage 3 sans palier.

Selon l'invention, ledit dispositif 1 comporte :
- un ensemble 4 de sources d'informations précisées ci-dessous, qui permettent de déterminer et/ou de fournir les valeurs de paramètres de vol de l'aéronef A ;
- des moyens 5 qui sont reliés par l'intermédiaire d'une liaison 6 audit ensemble 4 de sources d'informations, qui font de préférence partie d'un système de gestion de vol de type FMS (« Flight Management System » en anglais), et qui sont formés de manière à déterminer, pour au moins ladite phase d'approche intermédiaire PHi, à l'aide des valeurs reçues de l'ensemble 4 et de performances prédéterminées de l'aéronef A, un profil vertical PV ; et
- des moyens 7 qui utilisent ce profil vertical PV pour aider au pilotage de l'aéronef A lors de ladite phase d'approche intermédiaire PHi.

Selon l'invention, ce profil vertical PV comprend au moins un segment de décélération SD à pente adaptée. Cette pente est définie de telle sorte que ledit profil vertical PV, s'il est suivi, permet à l'aéronef A de maintenir un taux de décélération constant pendant toute ladite phase d'approche intermédiaire Phi.

Dans un mode de réalisation préféré, représenté sur la figure 2, ledit profil vertical PV comprend un unique segment de décélération SD non linéaire, pour lequel la pente est adaptée de façon continue.

En outre, dans un autre mode de réalisation (non représenté), ledit profil vertical PV comprend une succession de segments de décélération (rectilignes) à pente adaptée. Dans ce cas, une pente particulière, que doit respecter l'aéronef A, est associée à chacun desdits segments de décélération successifs.

La pente (FPA) de la trajectoire est adaptée au taux de décélération souhaité lors de la phase PHi (points géométriques définis par la procédure et les contraintes publiées). La pente résultante prédite par les moyens 5 est adaptée aux performances de l'aéronef A, en fonction notamment de sa configuration aérodynamique, de sa masse avion, et des conditions du jour (météo). La trajectoire est donc discrétisée pour permettre de maintenir un taux de décélération instantané proche de la valeur nominale souhaitée.

Ce taux de décélération (nominal) peut par exemple être défini à partir d'une vitesse corrigée CAS, d'une vitesse vraie TAS ou d'une vitesse sol, et sa valeur peut par exemple être proche de -4kts/10sec pour permettre une décélération confortable.

Ledit profil vertical PV peut ensuite être utilisé de différentes manières (précisées ci-dessous) pour aider au pilotage de l'aéronef A lors de ladite phase d'approche intermédiaire PHi.

En outre, si on installe le dispositif 1 sur plusieurs aéronefs A qui se suivent, et que l'on prévoit un taux de décélération commun pour tous ces aéronefs A, on est en mesure de maintenir un espacement en temps constant entre ces derniers. Les dispositifs 1 conformes à l'invention permettent ainsi d'améliorer la compatibilité d'une approche de type CDO avec une fonction ASPA S&M, en assurant un taux de décélération commun pour tous les aéronefs A en phase d'approche intermédiaire. Les ordres tactiques (du contrôle aérien (ATC) ou de la fonction ASPA S&M) pour maintenir l'espacement entre les aéronefs A présentent ainsi un impact réduit sur la trajectoire volée, par rapport à une mise en oeuvre usuelle. Par conséquent, au niveau d'une flotte d'aéronefs, on peut s'attendre à un impact réduit de la fonction ASPA S&M sur l'environnement.

Pour que le concept conforme à l'invention, dit concept « A-FPA », (pour « Adaptive Flight Path Angle » en anglais), puisse fonctionner, il est nécessaire :
- qu'un nouveau type de procédure soit publiée à l'approche (incluant des contraintes en taux de décélération) ; et
- que tous les aéronefs impliqués soient équipés dudit concept.

Par ailleurs, les paramètres, dont les valeurs sont fournies par l'ensemble 4 et utilisées par les moyens 5, comprennent au moins certaines des données suivantes :
- la configuration aérodynamique de l'aéronef ;
- la vitesse de l'aéronef ;
- la masse de l'aéronef ; et
- des conditions environnementales (vent,...) dans lesquelles est réalisé le vol de l'aéronef.

Les valeurs desdits paramètres peuvent être entrées dans le dispositif 1:
- soit manuellement par un membre d'équipage, à l'aide de moyens d'entrée usuels, en particulier un clavier et/ou une souris associés par exemple à un écran, faisant partie dudit ensemble 4 ;
- soit automatiquement, par exemple à l'aide d'une liaison de transmission de données reliant des sources d'informations de l'ensemble 4 au dispositif 1.

Pour chaque segment SD de la phase d'approche intermédiaire PHi, parmi les trois variables vitesse, poussée et pente, la vitesse et la poussée sont fixées, et la pente (FPA) est adaptée à la décélération visée et aux différentes conditions de vol (vitesse, configuration aérodynamique, météo).

La figure 2 montre que la présente invention utilise une décélération en pente adaptée pour maintenir un taux de décélération constant (segments SD successifs), au lieu d'utiliser une décélération par échange d'énergie (énergie cinétique [Vitesse] et énergie potentielle [altitude]) en mode descente comme lors d'une procédure CDO usuelle.

Dans un premier mode de réalisation, ledit dispositif 1 détermine le profil vertical PV, avant de faire voler l'aéronef A selon ladite phase d'approche intermédiaire PHi, à l'aide de valeurs prédites concernant notamment la météo ou la vitesse. Dans ce premier mode de réalisation, le dispositif 1 réalise donc une prédiction du profil vertical PV, et lesdits moyens 7 peuvent comporter des moyens d'affichage 8 qui sont reliés par l'intermédiaire d'une liaison 9 auxdits moyens 5 et qui sont formés de manière à présenter au pilote de l'aéronef A, sur un écran de visualisation 10, les caractéristiques dudit profil vertical PV.

Ainsi, le dispositif 1 prédit à l'avance le profil vertical PV qui permet à l'aéronef A de maintenir un taux de décélération nominal qui peut être publié dans des bases de données de navigation NDB (« Navigation Data Base » en anglais). Comme indiqué ci-dessus, le taux de décélération nominal peut par exemple être défini à partir d'une vitesse corrigée CAS, d'une vitesse vraie TAS ou d'une vitesse sol, et sa valeur peut, par exemple, être proche de -4kts/10sec pour permettre une décélération confortable.

En outre, dans un second mode de réalisation, ledit dispositif 1 détermine le profil vertical PV en temps réel, au cours d'un vol de l'aéronef A selon ladite phase d'approche intermédiaire PHi, en utilisant des valeurs courantes pour au moins certains des paramètres reçus de l'ensemble 4. Dans ce second mode de réalisation, lesdits moyens 7 peuvent comporter des moyens 11 qui sont reliés par l'intermédiaire d'une liaison 12 auxdits moyens 5 et qui sont formés de manière à guider l'aéronef A automatiquement de sorte qu'il respecte le profil vertical PV déterminé en temps réel par les moyens 5.

Dans ce second mode de réalisation, le dispositif 1 peut comporter, de plus, des moyens 13 usuels pour mettre en oeuvre au moins une fonction de guidage particulière, par exemple une fonction ASPA S&M. Ces moyens 13 sont par exemple reliés par une liaison 14 auxdits moyens 11. Si, pendant une phase d'approche intermédiaire PHi, au cours de laquelle l'aéronef A est guidé par les moyens 11 de manière à respecter le profil vertical PV déterminé en temps réel par les moyens 5, la fonction de guidage mise en oeuvre par les moyens 13 est engagée, le guidage réalisé par lesdits moyens 11 est suspendu et l'aéronef A est guidé selon lesdits moyens 13. Dans ce cas, des contraintes imposées (altitude ou vitesse) sont donc prioritaires par rapport à une décélération visée.

Par conséquent, lorsque au cours d'une phase d'approche intermédiaire PHi, au cours de laquelle l'aéronef A est guidé de manière à respecter le profil vertical, la fonction ASPA S&M est engagée, elle surpasse la contrainte publiée de décélération. Dans ce cas, la fonction ASPA S&M n'a, en général, qu'un d'impact réduit et ne sert qu'à ajuster la vitesse de l'aéronef suiveur par rapport à celle de l'aéronef leader, pour de petits écarts dûs à de légères erreurs de prédiction.

## Revendications

1. Procédé d'aide au pilotage d'un aéronef (A) lors d'une phase d'approche intermédiaire (PHi) au cours d'une descente de l'aéronef (A), **caractérisé en ce que** :
a) on reçoit les valeurs de paramètres relatifs à l'aéronef (A) et à son vol ;
b) à l'aide de ces valeurs et de performances prédéterminées de l'aéronef (A), on détermine, pour au moins ladite phase d'approche intermédiaire (PHi), un profil vertical (PV) qui comprend au moins un segment de décélération (SD) à pente adaptée et qui est tel qu'il permet à l'aéronef (A) de maintenir un taux de décélération constant pendant ladite phase d'approche intermédiaire (PHi) ; et
c) on utilise ce profil vertical (PV) pour aider au pilotage de l'aéronef (A) lors de ladite phase d'approche intermédiaire (PHi).

2. Procédé selon la revendication 1,
**caractérisé en ce que** lesdits paramètres comprennent au moins certaines des données suivantes :
- la configuration aérodynamique de l'aéronef (A) ;
- la vitesse de l'aéronef (A) ;
- la masse de l'aéronef (A) ; et
- des conditions environnementales dans lesquelles est réalisé le vol de l'aéronef (A).

3. Procédé selon l'une des revendications 1 et 2,
**caractérisé en ce que** l'on met en oeuvre l'étape b) à l'aide de moyens (5) faisant partie d'un système de gestion de vol de l'aéronef (A).

4. Procédé selon l'une des revendications 1 à 3,
**caractérisé en ce que** ladite phase d'approche intermédiaire (PHi) débute lorsque l'aéronef (A) atteint, lors d'une descente, une position dans laquelle il présente des capacités de décélération prédéterminées, et se termine lorsqu'une trajectoire d'atterrissage (3) d'une phase d'approche finale est atteinte.

5. Procédé selon l'une des revendications 1 à 4,
**caractérisé en ce que** l'on met en oeuvre les étapes a) et b), avant de faire voler l'aéronef (A) selon ladite phase d'approche intermédiaire (PHi), de manière à réaliser une prédiction d'un profil vertical (PV).

6. Procédé selon l'une des revendications 1 à 4,
**caractérisé en ce que** l'on met en oeuvre au moins ladite étape b) au cours d'un vol de l'aéronef (A) selon ladite phase d'approche intermédiaire (PHi), et à l'étape c), on guide l'aéronef (A) de sorte qu'il respecte le profil vertical (PV) déterminé en temps réel à l'étape b).

7. Procédé selon la revendication 6,
**caractérisé en ce que**, si, pendant une phase d'approche intermédiaire (PHi), au cours de laquelle l'aéronef (A) est guidé de manière à respecter le profil vertical (PV) déterminé en temps réel à l'étape b), une autre fonction de guidage est engagée, le guidage selon ledit profil vertical (PV) est suspendu et l'aéronef (A) est guidé selon cette autre fonction de guidage.

8. Procédé selon l'une quelconque des revendications 1 à 7, **caractérisé en ce que** ledit profil vertical (PV) comprend un unique segment de décélération (SD) non linéaire, pour lequel la pente est adaptée de façon continue.

9. Procédé selon l'une quelconque des revendications 1 à 7, **caractérisé en ce que** ledit profil vertical comprend une succession de segments de décélération linéaires, une pente particulière que doit respecter l'aéronef étant associée à chacun desdits segments de décélération.

10. Dispositif d'aide au pilotage d'un aéronef lors d'une phase d'approche intermédiaire (PHi) au cours d'une descente de l'aéronef (A), **caractérisé en ce qu'**il comporte :
- des premiers moyens (4) pour recevoir les valeurs de paramètres relatifs à l'aéronef (A) et à son vol ;
- des deuxièmes moyens (5) pour déterminer, pour au moins ladite phase d'approche intermédiaire (PHi), à l'aide de ces valeurs et de performances prédéterminées de l'aéronef (A), un profil vertical (PV) qui comprend au moins un segment de décélération (SD) à pente adaptée, et qui est tel qu'il permet à l'aéronef (A) de maintenir un taux de décélération constant pendant ladite phase d'approche intermédiaire (PHi) ; et
- des troisièmes moyens (7) qui utilisent ce profil vertical (PV) pour aider au pilotage de l'aéronef (A) lors de ladite phase d'approche intermédiaire (PHi).

11. Dispositif selon la revendication 10,
**caractérisé en ce que** lesdits deuxièmes moyens (5) font partie d'un système de gestion de vol de l'aéronef (A).

12. Aéronef,
**caractérisé en ce que** qu'il comporte un dispositif (1) tel que celui spécifié sous l'une des revendications 10 et 11.

## Patentansprüche

1. Verfahren zur Flughilfe für ein Luftfahrzeug (A) in einer Zwischenanflugphase (PHi) während eines Sink-flugs des Luftfahrzeugs (A), **dadurch gekennzeichnet, dass**:
a) Werte von Parametern empfangen werden, die das Luftfahrzeug (A) und dessen Flug betreffen;
b) mithilfe dieser Werte und von vorbestimmten Leistungskenngrößen des Luftfahrzeugs (A) für wenigstens die Zwischenanflugphase (PHi) ein vertikales Profil (PV) bestimmt wird, welches wenigstens ein Verzögerungssegment (SD) mit angepasster Neigung umfasst und welches so beschaffen ist, dass es dem Luftfahrzeug (A) ermöglicht, einen konstante Verzögerungswert während der Zwischenanflugphase (PHi) aufrechtzuerhalten; und
c) dieses vertikale Profil (PV) verwendet wird, um bei der Steuerung des Luftfahrzeugs (A) in der Zwischenanflugphase (PHi) zu helfen.

2. Verfahren nach Anspruch 1,
**dadurch gekennzeichnet, dass** die Parameter wenigstens einige der folgenden Daten umfassen:
- die aerodynamische Gestaltung des Luftfahrzeugs (A);
- die Geschwindigkeit des Luftfahrzeugs (A);
- die Masse des Luftfahrzeugs (A); und
- Umweltbedingungen, unter denen der Flug des Luftfahrzeugs (A) durchgeführt wird.

3. Verfahren nach einem der Ansprüche 1 und 2,
**dadurch gekennzeichnet, dass** der Schritt b) mithilfe von Mitteln (5) durchgeführt wird, die Bestandteil eines Flugmanagementsystems des Luftfahrzeugs (A) sind.

4. Verfahren nach einem der Ansprüche 1 bis 3,
**dadurch gekennzeichnet, dass** die Zwischenanflugphase (PHi) beginnt, wenn das Luftfahrzeug (A) bei einem Sinkflug eine Position erreicht, in welcher es vor-bestimmte Verzögerungsfähigkeiten aufweist, und endet, wenn eine Landeanflugbahn (3) einer Endanflugphase erreicht ist.

5. Verfahren nach einem der Ansprüche 1 bis 4,
**dadurch gekennzeichnet, dass** die Schritte a) und b) durchgeführt werden, bevor ein Flug des Luftfahrzeugs (A) gemäß der Zwischenanflugphase (PHi) bewirkt wird, derart, dass eine Vorhersage eines vertikalen Profils (PV) realisiert wird.

6. Verfahren nach einem der Ansprüche 1 bis 4,
**dadurch gekennzeichnet, dass** wenigstens der Schritt b) während eines Fluges des Luftfahrzeugs (A) gemäß der Zwischenanflugphase (PHi) durchgeführt wird und im Schritt c) das Luftfahrzeug (A) derart geführt wird, dass es das in Echtzeit im Schritt b) bestimmte vertikale Profil (PV) einhält.

7. Verfahren nach Anspruch 6,
**dadurch gekennzeichnet, dass**, falls während einer Zwischenanflugphase (PHi), während der das Luftfahrzeug (A) derart geführt wird, dass es das in Echtzeit im Schritt b) bestimmte vertikale Profil (PV) einhält, eine andere Führungsfunktion aktiviert wird, die Führung gemäß dem vertikalen Profil (PV) unterbrochen wird und das Luftfahrzeug (A) gemäß dieser anderen Führungsfunktion geführt.

8. Verfahren nach einem der Ansprüche 1 bis 7,
**dadurch gekennzeichnet, dass** das vertikale Profil (PV) ein einziges nichtlineares Verzögerungssegment (SD) umfasst, für welches die Neigung kontinuierlich angepasst wird.

9. Verfahren nach einem der Ansprüche 1 bis 7,
**dadurch gekennzeichnet, dass** das vertikale Profil eine Folge von linearen Verzögerungssegmenten umfasst, wobei eine spezielle Neigung, welche das Luftfahrzeug einhalten muss, jedem der Verzögerungssegmente zugeordnet ist.

10. Vorrichtung zur Flughilfe für ein Luftfahrzeug in einer Zwischenanflugphase (PHi) während eines Sink-flugs des Luftfahrzeugs (A), **dadurch gekennzeichnet, dass** sie aufweist:
- erste Mittel (4) zum Empfangen der Parameterwerte, die das Luftfahrzeug (A) und dessen Flug betreffen;
- zweite Mittel (5) zum Bestimmen, für wenigstens die Zwischenanflugphase (PHi), mithilfe dieser Werte und von vorbestimmten Leistungskenngrößen des Luftfahrzeugs (A), eines vertikalen Profils (PV), welches wenigstens ein Verzögerungssegment (SD) mit angepasster Neigung umfasst und welches so beschaffen ist, dass es dem Luftfahrzeug (A) ermöglicht, einen konstante Verzögerungswert während der Zwischenanflugphase (PHi) aufrechtzuerhalten; und
- dritte Mittel (7), welche dieses vertikale Profil (PV) verwenden, um bei der Steuerung des Luftfahrzeugs (A) in der Zwischenanflugphase (PHi) zu helfen.

11. Vorrichtung nach Anspruch 10,
**dadurch gekennzeichnet, dass** die zweiten Mittel (5) Bestandteil eines Flugmanagementsystems des Luftfahrzeugs (A) sind.

12. Luftfahrzeug,
**dadurch gekennzeichnet, dass** es eine Vorrichtung (1) wie diejenige aufweist, die in einem der Ansprüche 10 und 11 spezifiziert ist.

## Claims

1. An aiding method for piloting an aircraft (A) upon an intermediate approach phase (Phi) during a descent of the aircraft (A),
**characterized in that**:
a) the values of the parameters relative to the aircraft (A) and the flight thereof are received;
b) with the help of such predetermined values and performances of the aircraft (A), for at least said intermediate approach phase (Phi), a vertical profile (PV) is determined, which comprises at least one deceleration segment (SD) with adaptive slope, and which is such that it allows the aircraft (A) to hold a constant deceleration rate during said intermediate approach phase (PHi); and
c) such a vertical profile (PV) is used so as to aid the aircraft (A) piloting upon said intermediate approach phase (PHi).

2. The method according to claim 1,
**characterized in that** said parameters comprise at
least some of the following data:
- the aerodynamic configuration of the aircraft (A);
- the speed of the aircraft (A);
- the mass of the aircraft (A); and
- environmental conditions, in which the flight of the aircraft (A) is performed.

3. The method according to one of claims 1 and 2, **characterized in that** step b) is implemented thru
means (5) being part of a flight management system of the aircraft (A).

4. The method according to one of claims 1 to 3, **characterized in that** said intermediate approach
phase (PHi) starts when the aircraft (A) reaches, upon a descent, a position, in which it presents predetermined deceleration capacities, and ends when a landing path (3) of a final approach phase is reached.

5. The method according to one of claims 1 to 4, **characterized in that** said steps a) and b) are
implemented before flying the aircraft (A) according to said intermediate approach phase (PHi), so as to perform a prediction of a vertical profile (PV).

6. The method according to one of claims 1 to 4, **characterized in that** at least said step b) is
implemented during a flight of the aircraft (A) according to said intermediate approach phase (PHi), and, at step c), the aircraft (A) is guided so that it observes the vertical profile (PV) being determined in real time at step b).

7. The method according to claim 6,
**characterized in that**, if, upon an intermediate
approach phase, during which the aircraft (A) is guided so that it observes the vertical profile (PV) being determined in real time at step b), another guiding function is engaged, the guidance according to said vertical profile (PV) is suspended, and the aircraft (A) is only guided according such other function of guidance.

8. The method according to any one of claims 1 to 7, **characterized in that** said vertical profile (PV) comprises only one non linear deceleration segment (SD), for which the slope is adapted on a continuous way.

9. The method according to any one of claims 1 to 7, **characterized in that** said vertical profile (PV) comprises a succession of linear deceleration segments, a particular slope that the aircraft (A) must observe being associated with each of said deceleration segments.

10. An aiding device for piloting an aircraft upon an intermediate approach phase (PHi) during a descent of the aircraft (A),
**characterized in that** it comprises:
- first means (4) for receiving the parameter values relative to the aircraft (A) and the flight thereof;
- second means (5) for determining, for at least said intermediate approach phase (PHi), with the help of such predetermined values and performances of the aircraft (A), a vertical profile (PV) comprising at least one deceleration segment (SD) with an adaptive slope, and which is such that it enables the aircraft (A) to hold a constant deceleration rate during said intermediate approach phase (PHi); and
- third means (7) using such vertical profile (PV) to aid aircraft (A) piloting upon said intermediate approach phase (PHi).

11. The device according to claim 10,
**characterized in that** said second means (5) are part
of a flight management system of the aircraft (A).

12. An aircraft,
**characterized in that** it comprises a device (1) such
as specified in one of claims 10 and 11.
